Europäisches Patentamt

European Patent Office

Office européen des brevets

(11) Veröffentlichungsnummer: **0 071 717**
**B1**

(12) EUROPÄISCHE PATENTSCHRIFT

(45) Veröffentlichungstag der Patentschrift:
17.09.86

(21) Anmeldenummer: 82105183.6

(22) Anmeldetag: 14.06.82

(51) Int. Cl.⁴: **C 08 J  9/20,** C 08 F  2/18 //
(C08J9/20, C08L25:04)

(54) Verfahren zur Herstellung feinteiliger, expandierbarer Styrolpolymerisate mit verbesserten Eigenschaften.

(30) Priorität: 30.07.81 DE 3130014
23.01.82 DE 3202159

(43) Veröffentlichungstag der Anmeldung:
16.02.83 Patentblatt 83/7

(45) Bekanntmachung des Hinweises auf die Patenterteilung:
17.09.86 Patentblatt 86/38

(84) Benannte Vertragsstaaten:
AT BE DE FR GB IT NL SE

(56) Entgegenhaltungen:
DE - A - 1 520 184
DE - A - 1 595 627
DE - A - 1 916 387
DE - A - 2 307 012
FR - A - 1 385 374

(73) Patentinhaber: **HÜLS AKTIENGESELLSCHAFT,**
**Patentabteilung / PB 15 - Postfach 13 20,**
**D-4370 Marl 1 (DE)**

(72) Erfinder: **Rigler, Karl Josef, Dr., Helgolandstrasse 16,**
**D-4350 Recklinghausen (DE)**
Erfinder: **Trukenbrod, Karl, Dr., Leunaer Strasse 32,**
**D-4370 Marl (DE)**
Erfinder: **Bollenrath, Franz-Michael, Dr., Lipper Weg 197,**
**D-4370 Marl (DE)**

## Beschreibung

Die Herstellung der feinteiligen, expandierbaren Styrolpolymerisate erfolgt bekanntlich nach einem Suspensions-Polymerisationsverfahren. Dabei werden Styrol und ggf. Comonomere, in denen einer oder mehrere in Wasser unlösliche Initiatoren gelöst sind, unter Rühren in etwa derselben Menge Wasser unter Rühren dispergiert. Menge und Art der Polymerisationsinitiatoren werden mit der Polymerisationstemperatur so abgestimmt, dass einerseits in möglichst kurzer Zeit ein vollständiger Polymerisationsumsatz erreicht wird, andererseits ein Polymerisat mit einem Molgewicht zwischen 200 000 und 300 000 entsteht. Zur Verbesserung der Dispergierung der Styrolphase in Wasser bzw. zur Einstellung der Teilchengrösse werden in der wässrigen Phase geringe Mengen eines organischen oder anorganischen Dispergiermittels verwendet, beispielsweise ein wasserlösliches Schutzkolloid, wie Polyvinylalkohol, Hydroxyethylcellulose, oder ein in Wasser unlösliches Salz, wie Tricalziumphosphat; im letzteren Falle arbeitet man in Verbindung mit geringen Mengen Emulgator zur Suspensionsstabilisierung. Je nach Verfahren wird das Treibmittel entweder vor, während oder nach der Polymerisation zugegeben. Insbesondere wird die Hauptmenge des Treibmittels nach dem Ausbilden des Kornspektrums zugegeben, das ist nach einem Umsatz von 50, insbesondere von mindestens 70% (DE-ASS 11 522 261, 1 570 930, 1 595 627, GB-PS 877 864, DE-OS 1 916 387).

Nach Beendigung des Polymerisationszyklusses wird das Polymerisat von der wässrigen Phase abgetrennt, gewaschen, getrocknet und gesiebt. Vor der Weiterverarbeitung werden die Rohperlen üblicherweise mit einer Oberflächenbeschichtung ausgerüstet, die ein Verkleben beim Vorschäumen verhindern soll.

Bekanntlich werden Formkörper durch Expandieren der so erhaltenen feinteiligen, expandierbaren Styrolpolymerisate in Formen hergestellt. Bei diesem Verfahren werden die feinteiligen Styrolpolymerisate zunächst mit Wasserdampf oder heissen Gasen auf Temperaturen oberhalb ihres Erweichungspunktes erhitzt, so dass sie zu einem losen Haufwerk aufschäumen (Vorschäumen). Die vorgeschäumten Styrolpolymerisate werden zunächst zwischengelagert und dann in einer druckfesten, jedoch nicht gasdichten Form durch erneutes Erhitzen mit Dampf weiter aufgeschäumt, wobei sie zu einem Formkörper versintern, der in den Dimensionen dem Innenhohlraum der verwendeten Form entspricht. Nach dem Ausschäumen kühlt man den erhaltenen Formkörper innerhalb der Form. Es muss solange gekühlt werden, bis auch das Innere des Formkörpers auf Temperaturen unterhalb des Erweichungspunktes abgekühlt ist. Entnimmt man den Formkörper vorzeitig der Form, so kann eine Verformung eintreten. Da schaumförmige Kunststoffe gute Isolatoren sind, werden zum Abkühlen der Formkörper relativ lange Kühlzeiten benötigt. Man bezeichnet den Zeitraum, nach dem man frühestens einen Formkörper der Form entnehmen kann, ohne dass nachträgliche Verformung eintritt, meistens als Mindestformverweilzeit (MFZ).

Der Formkörper wird nach dem Herausnehmen aus der Form meist noch einige Zeit lang bis zum vollständigen Abkühlen gelagert und kann dann, z.B. wenn es sich um einen Block handelt, zu Schaumstoffplatten für Isolierzwecke geschnitten werden. Während der Lagerung des Blockes fallen dessen Seitenflächen mehr oder weniger stark ein, was vor allem bei den direkt der Bedampfung ausgesetzten Flächen zu beobachten ist. Die Erscheinung des Einfallens der Blöcke sowie ein schlechteres Verschweissen der geschäumten Styrolpolymerisatteilchen treten besonders dann auf, wenn dem Styrolpolymerisat ein halogenhaltiges Flammschutzmittel zugesetzt wurde. Es hat in der Vergangenheit nicht an Versuchen gefehlt, durch Zusätze der verschiedensten Art die Verarbeitungsparameter Mindestformverweilzeit und Verschweissungsgüte zu optimieren. So wird empfohlen, Fettsäuren oder Fettsäurederivate (US-PS 3 389 097, DE-PS 2 133 253) bzw. Kautschuke (US-PS 3 682 844, DE-PS 2 101 666) zuzusetzen; auch Polyethylenwachse (US-PS 3 320 188, US-PS 3 060 138, EP 0 000 120) oder Bromverbindungen (FR-PS 1 530 701, DE-OS 2 542 281) werden zur Verkürzung der Mindestformverweilzeit (bei hohem Verschweissungsgrad) empfohlen. Auch verfahrenstechnische Massnahmen, wie schnelles Abkühlen der Perlen vor dem Verschäumen (DE-PS 1 504 577) wurden vorgeschlagen. In der DE-OS 2 755 005 wird ein verbessertes Verfahren zur Herstellung expandierbarer Styrolpolymerisatteilchen beschrieben, wobei in einem vollständig mit Wasser gefüllten Reaktor gearbeitet wird. Dieses Verfahren ist technisch aufwendig; die homogene Durchmischung eines vollständig gefüllten Polymerisationsreaktors ist praktisch nicht gewährleistet. Anbackungen in einem derartigen System, besonders bei grösseren Reaktoren lassen sich nicht vermeiden und führen zu hohem Anteil an nicht brauchbaren Perlen.

Wie schon erwähnt, ist besonders bei flammhemmend ausgerüsteten expandierbaren Styrolpolymerisaten ein starkes Einfallen der Seitenflächen der ausgeschäumten Blöcke zu beobachten. Zur Vermeidung dieses Nachteils wurden verschiedene Zusätze wie Hydroxylamine (DE-PS 2 104 867), Amine (DE-AS 2 520 635) oder mit Aminen substituierte Triazinderivate (DE-OS 2 807 710) empfohlen. Auch die Zugabe von mit Styrol copolymerisierbaren Bromverbindungen soll die Formstabilität der Schaumstoffblöcke verbessern (DE-AS 2 501 680). Alle Zusätze haben aber den Nachteil, dass diese mit den übrigen Polymerisationshilfsstoffen, wie Initiatoren usw. unübersichtliche Nebenreaktionen eingehen und so zu einer schlechten Wiederholbarkeit der Ergebnisse beitragen. Ausserdem sind die verwendeten Zusätze nicht in allen Fällen physiologisch einwandfrei, so dass das Einsatzgebiet der Produkte eingeschränkt wird.

Es ist die Aufgabe der Erfindung, ein Herstellungsverfahren bereitzustellen, wobei es durch einfache verfahrenstechnische Massnahmen, ohne spezielle chemische Zusätze gelingt, dass die geschilderten Nachteile nicht auftreten. Mit anderen Worten soll durch vereinfachte Prozessführung gleichzeitig verbesserte Produkteigenschaften erzielt werden bzw. sollen die nachteiligen Produkteigenschaften nicht auftreten.

Es wurde gefunden, dass man feinteilige, expandierbare Styrolpolymerisate erhält, die nach einer Vorschäumstufe in nicht gasdicht schliessenden Formen zu Schaumstoffkörpern versintert werden und die neben ausgezeichneten Verarbeitungseigenschaften, wie kurze Mindestformverweilzeit, hoher Verschweissungsgrad und gute Formstabilität, eine gleichmässige Zellstruktur aufweisen. Sie werden erhalten durch Polymerisation von Styrol und ggf. üblichen Comonomeren in wässriger Suspension unter Rühren in einem nicht vollständig gefüllten Reaktor in Gegenwart monomerlöslicher, radikalbildender Initiatoren und Dispergiermittel unter Zusatz von niedrigsiedenden, nur quellenden, flüssigen aliphatischen Kohlenwasserstoffen als Treibmittel bei einem Monomerumsatz von mindestens 70%, wobei während der Treibmittelzugabe bei einem Monomerumsatz von 70 bis 85% die zu beladenden Polymerisatperlen intensiv gerührt werden, so dass diese eine möglichst geringe zeitliche und räumliche Berührung mit der Gasphase und untereinander erfahren und während dieser Treibmittelzugabe somit ein ausgeglichenes Verhältnis von Horizontal- und Vertikaldurchmischung erreicht wird und beim Rühren die dem Gasraum zugekehrte Seite der Flüssigphase ohne Bewegung bleibt.

Die DE-AS 1 520 184 beschreibt ein Verfahren zur Herstellung von verschäumbaren Polystyrol-Teilchen durch Suspensionspolymerisation unter Rühren, wobei die Polymerisation in Gegenwart eines wasserlöslichen Nitrits vorgenommen wird und wobei dieses Nitrit zugesetzt wird bevor ein Polymerisationsumsatz von 98% erreicht wird. Als Treibmittel werden ausschliesslich gasförmige, nämlich Propan oder Butan, eingesetzt, wobei diese bei einem Styrolumsatz von 80 bis 98% zugesetzt werden. Es wird ferner ausgeführt, dass eine direkte Beziehung zwischen Gestalt der Polystyrolteilchen und dem daraus hergestellten Endprodukt bestehen, d.h. die Polystyrolteilchen sollen eine annähernd ideale Rundung besitzen (l.c. Spalte 2, Zeilen 40 bis 45). Dies soll erreicht werden durch die Wahl des Dispergiermittels und die Rührbedingungen während der Polymerisation, wobei in der flüssigen Phase keine Wirbelbildungen auftreten sollen und damit Zusammenstösse zwischen den Teilchen vermieden werden sollen, um Fehlstellen in der Oberfläche der Teilchen zu verhindern (l.c. Spalte 5, Zeilen 30 bis 43).

Nach dem Verfahren dieser Literaturstelle wird bereits in der Polymerisationsstufe andersartig gearbeitet als bei der Erfindung, nämlich unter Zusatz einer geringen Menge Nitrit und anderen Rührbedingungen, und ausserdem werden die nach diesem Verfahren des Standes der Technik erhaltenen expandierbaren Teilchen nach dem Extrusionsverfahren unter Druck verschmolzen, also nicht versintert.

Die DE-OS 1 916 387 kann die Erfindung ebenfalls nicht nahelegen, da die Reynoldszahlen allein keine hinreichende Angabe für die Rührbedingungen darstellen.

Keine dieser Literaturstellen gibt einen Hinweis über die Rührcharakteristik der Oberfläche des Reaktionsgemisches während der Treibmittelzugabe.

In dem Polymerisationsreaktor sollen demnach nach dem Verfahren der Erfindung während der Treibmittelzugabe keine Zonen hohen Schergefälles vorliegen oder mit anderen Worten ausgedrückt ein ausgeglichenes Verhältnis von Horizontal- und Vertikaldurchmischung erreicht werden.

Die minimale Berührung der Teilchen mit der Gasphase und untereinander während der Treibmittelzugabe wird also durch die Rührbedingungen eingestellt. Eine wesentliche Bedingung ist, dass beim Rühren eine möglichst trombenfreie Oberfläche des Rührmediums erhalten bleibt, d.h., dass eine Trombenbildung vermieden wird, mit anderen Worten, wenn die dem Gasraum zugekehrte Seite der Flüssigphase ohne Bewegung ist.

Die Abstimmung der Drehzahl und der Füllhöhe mit der Reaktorgeometrie um die notwendigen Bedingungen aufrechtzuerhalten, kann mit üblichen Vorrichtungen erfolgen. Es kann daher sowohl während der Polymerisation als auch bei der Treibmittelzugabe ggf. mit gleichen Drehzahlen gearbeitet werden oder im allgemeinen jedoch bei unterschiedlichen Drehzahlen, wobei wesentlich ist, dass die geschilderten notwendigen Bedingungen die praktisch trombenfreie Oberfläche während der Treibmittelzugabe eingehalten wird. Ist die Füllhöhe im Reaktor das 0,5- bis kleiner als 1,5-fache des Reaktordurchmessers, arbeitet man mit nur einem achsenparallel (symmetrisch) angeordneten Rührer und entsprechenden Stromstörern.

Zum Rühren des Reaktorinhaltes sind alle Systeme geeignet, die einen zur rotierenden Translationsbewegung starken Axialumlauf der Polymerisatteilchen bewirken. Es haben sich Mischsysteme mit einem achsenparallelen oder koachsialem Rührer bewährt, dem auch ein oder mehrere zu der Behälterachse seitlich versetzte Stromstörer verschiedenster Form und Grösse eingeordnet sein können. Dabei kann der Rührer z.B. ein Impellerrührer sein, dessen Drehzahl mit der Form und der Anzahl der stromstörenden Einbauten entsprechend abgestimmt ist.

Bei Reaktoren, bei denen die Füllhöhe mindestens das 1,5fache bis 3fache des Reaktordurchmessers ist, arbeitet man mit einem Rührsystem, das aus mindestens 2, mit gegenläufigem Drehsinn laufenden Rührern besteht, die unsymmetrisch angeordnet sind. Derartige Rührsysteme sind unter dem Namen Doppel-Axial-Turbulenzsysteme bekannt. Es gelingt damit die homogene Durchmischung sehr schlanker Reaktoren ohne Trombenbildung. Diese besonders vorteilhafte Ausführungsform ist besonders geeignet für Grossreaktoren > 50, insbesondere > 100 m³ Inhalt. Bei diesen Grossreaktoren ist die schlanke Form erforderlich, um die Polymerisationswärme ausreichend schnell abführen zu können.

Als besonders vorteilhaft hat sich gezeigt, das Treibmittel in die Flüssigphase einzudosieren. Der Treibmittelzusatz erfolgt bei einem Monomerumsatz von 70 bis 85%.

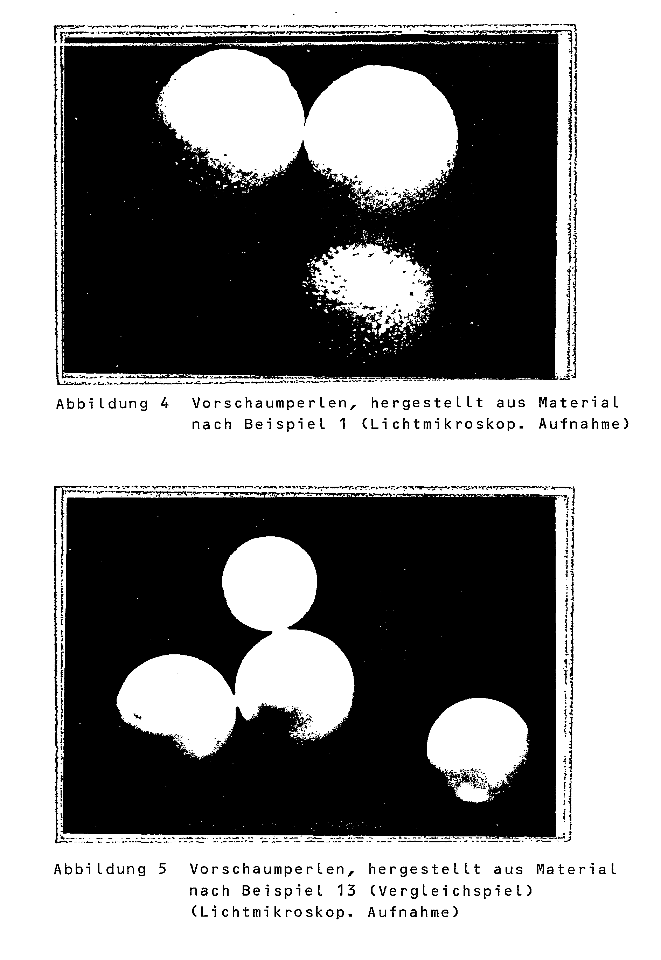

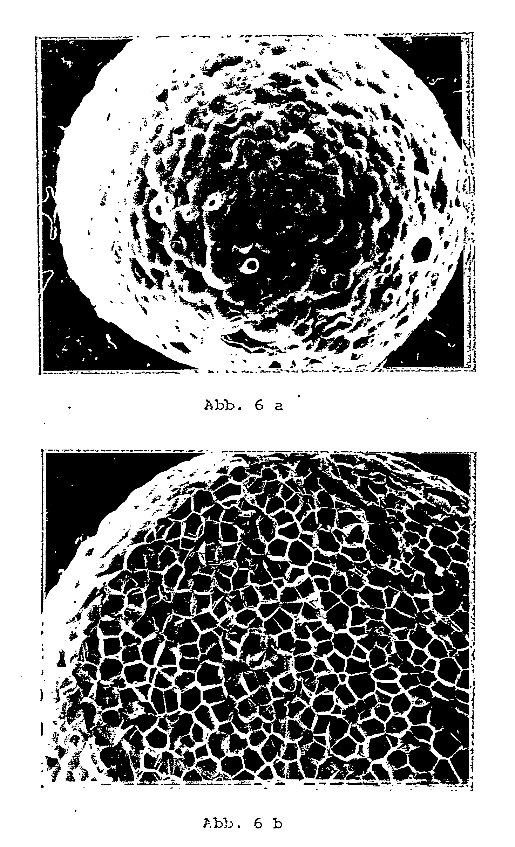

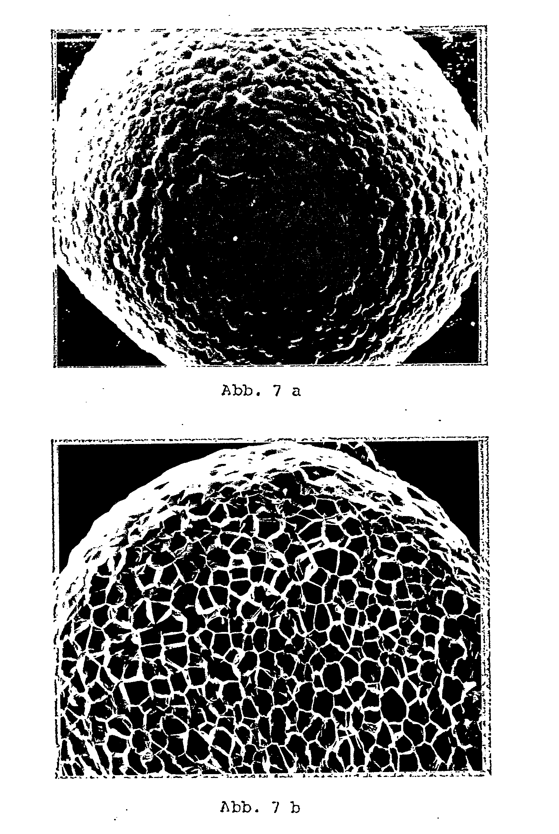

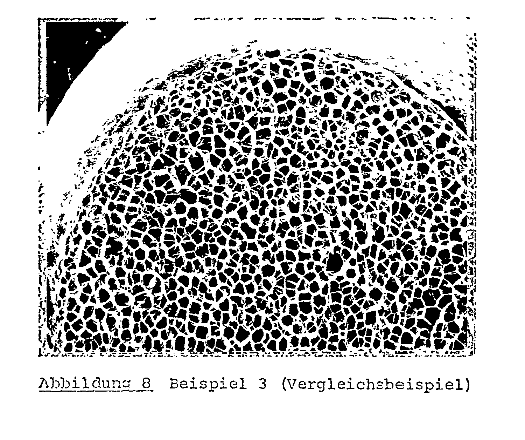

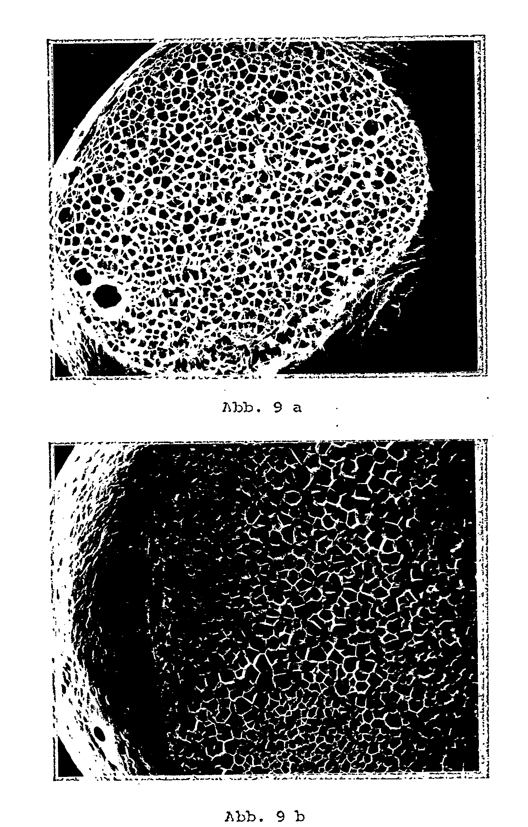

Die nach dem Verfahren der Erfindung hergestellten Polymerisate zeichnen sich dadurch aus, dass diese bereits beim Vorschäumvorgang zu Vorschaumperlen mit äusserst homogener Zellstruktur expandieren, wobei diese Vorschaumperlen eine himbeerartige Struktur der Oberfläche aufweisen. Elektronenmikroskopische Aufnahmen zeigen, dass diese Blasen an der Oberfläche der Vorschaumperle die letzten Zellen nach aussen darstellen, und zwar sind diese äusseren Zellen von etwa derselben Grösse wie die Zellen im Inneren der Vorschaumperle (Abbildungen 4 bis 9).

Für die Herstellung der feinteiligen, expandierbaren Styrolpolymerisate werden als Monomer Styrol oder Monomergemische mit mindestens 50 Gewichtsprozent Styrol eingesetzt. Geeignete Comonomere sind z.B. α-Methylstyrol, kernhalogenierte Styrole, Acrylnitril, Ester der Acryl- und Methacrylsäure von Alkoholen mit 1 bis 8 Kohlenstoffatomen, N-Vinylverbindungen, wie N-Vinylcarbazol oder auch geringe Mengen Butadien oder Divinylbenzol, enthalten.

Die Suspensionspolymerisation wird bei Temperaturen von 80 bis 130 °C durchgeführt. Sie wird in üblicher Weise mit einer oder mehreren radikalbildenden Substanzen initiiert, wobei t-Butylperbenzoat, t-Butylperoctoat, Di-t-butylperoxid, Dibenzoylperoxid oder deren Mischungen als Beispiele genannt seien.

Als Suspensionsstabilisatoren können in bekannter Weise organische Schutzkolloide, wie Polyvinylalkohol, Polyvinylpyrrolidon oder Polyvinylpyrrolidoncopolymerisate oder mineralische Suspendierhilfsmittel, wie fein verteiltes Tricalziumphosphat und Bariumphosphat oder auch Gemische aus organischen Schutzkolloiden und mineralischen Suspendiermitteln verwendet werden.

Als Treibmittel werden die bekannten niedrigsiedenden, nur quellenden, flüssigen aliphatischen Kohlenwasserstoffe, wie Pentan, Hexan, cycloaliphatische Kohlenwasserstoffe, wie Cyclohexan oder Halogenkohlenwasserstoffe, wie 1,2,2-Trifluor-1,1,2-trichlorethan oder auch Mischungen dieser Verbindungen verwendet. Die Menge an Treibmittel liegt bei 3 bis 15 Gewichtsprozent, vorzugsweise zwischen 5 und 8 Gewichtsprozent, bezogen auf das Styrolpolymerisat.

Die expandierbaren Styrolpolymerisate können die üblichen Flammschutzmittel wie organische Halogenverbindungen, insbesondere Bromverbindungen, enthalten; insbesondere seien genannt die vollständig oder partiell bromierten Oligomeren des Butadiens oder des Isoprens mit einem mittleren Polymerisatonsgrad von 2 bis 20, z.B. 1,2,5,6-Tetrabromcyclooctan, 1,2,5,6,9,10-Hexabromcyclododecan, bromiertes Polybutadien mit einem Polymerisationsgrad von z.B. 3 bis 15.

Die organischen Halogenverbindungen sind in Mengen von 0,4 bis 3 Gewichtsprozent im expandierbaren Styrolpolymerisat enthalten. Zusätzlich zu den flammhemmenden Halogenverbindungen können die bekannten Synergisten in üblichen Mengen eingesetzt werden, vorzugsweise organische Peroxide, insbesondere solche mit einer Halbwertszeit von von mindestens zwei Stunden bei 373 °K (Grad Kelvin).

Falls gewünscht, können die Halogenverbindungen auch in bekannter Weise in Mengen von 0,05 bis 1 Gewichtsprozent zur Verbesserung der Mindestformverweilzeit eingesetzt werden. Nach dem Verfahren der Erfindung ist jedoch ein solcher Zusatz nicht erforderlich.

Die expandierbaren Styrolpolymerisate können ausserdem Zusatzstoffe, wie Farbstoffe, Füllstoffe und Stabilisierungsmittel enthalten. Sie liegen nach der Herstellung in feinteiliger Form vor (z.B. Perlform) und haben im allgemeinen einen Teilchendurchmesser von 0,4 bis 3 mm. Sie werden nach dem üblichen Verfahren in vorgeschäumtem Zustand durch Erhitzen in Formen, welche nicht gasdicht schliessen, weiter aufgeschäumt und zu Schaumstoffkörpern versintert, die in ihren Ausmassen dem Innenhohlraum der verwendeten Formen entsprechen. Die Styrolpolymerisate können zu ausserordentlich formstabilen Formkörpern verarbeitet werden. Schaumstoffblöcke der Masse 1 × 1 × 0,5 m neigen nach dem Entformen nur in äusserst geringem Mass zum Einfallen der Seitenflächen. Die Schaumstoffkörper oder -blöcke sind weiterhin durch besonders gute Verschweissung der einzelnen Teilchen gekennzeichnet. Sie besitzen daher eine besonders gute mechanische Stabilität.

Es ist ein weiterer Vorteil des Verfahrens der Erfindung, dass die Verarbeitungseigenschaften Mindestformverweilzeit und Verschweissungsgüte beliebig einstellbar sind. Die vorgeschäumten Teilchen, welche nach dem Verfahren der Erfindung erhalten werden, besitzen überraschenderweise eine deutlich himbeerartige Struktur. Wie aus den beiligenden Abbildungen 4 bis 9 hervorgeht (Licht- bzw. Elektronenmikroskopie), stellen die Bläschen an der Oberfläche der Vorschaumperlen die letzten Zellen nach aussen dar, d.h. die Zellstruktur ist extrem gleichmässig. Dadurch wird aber eine Vergrösserung der Oberfläche der Vorschaumperlen erreicht, was die Verschweissung der Vorschaumperlen beim Ausschäumen verbessert. Dadurch ist zur Erzielung desselben Verschweissungsgrades wesentlich weniger Energie erforderlich, d.h. die Schaumstoffblöcke können bei geringerem Bedampfungsdruck ausgeschäumt werden.

Beispiele 1 und 2 sowie Vergleichsbeispiele V3 und V6 (Erläuterungen Tabelle 1)

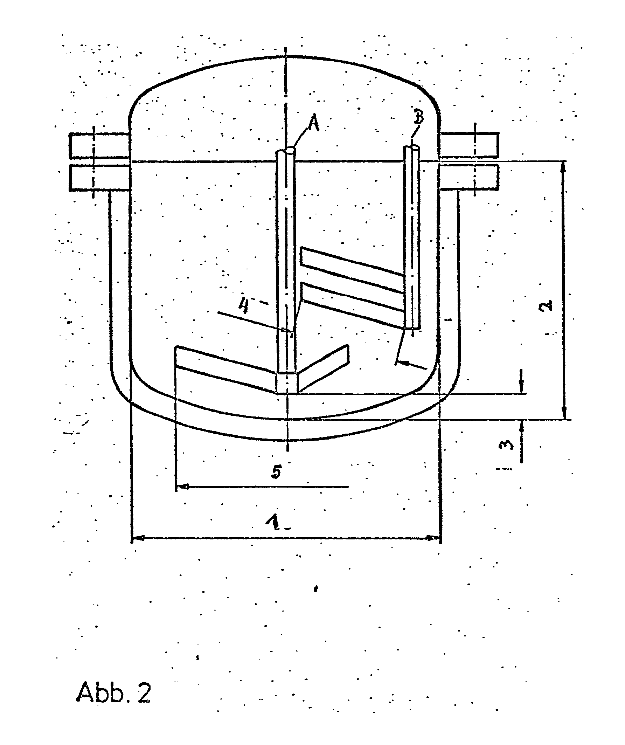

In einem druckfesten Rührkessel aus korrosionsfreiem Stahl, wie er in Abbildung 2 dargestellt ist, wurde jeweils eine Mischung aus 100 Gewichtsteilen vollentsalztem Wasser, 100 Gewichtsteilen Styrol, 0,4 Gewichtsteilen Dibenzoylperoxid, 0,1 Gewichtsteilen tert.-Butylperbenzoat, 0,75 Gewichtsteilen Hexabromcyclododecan, 0,30 Gewichtsteilen Dicumylperoxid unter Rühren auf 90 °C erhitzt. Die Drehzahl des Rührers wurde auf die in Tabelle 1 angegebenen Werte eingestellt. Nach 3 Stunden bei 90 °C wurden 0,1 Gewichtsteile (bezogen auf die wässrige Phase) Polyvinylalkohol mit einer Verseifungszahl von 140 zugegeben. Unmittelbar danach erfolgte die Zugabe von 7 Gewichtsteilen eines Gemisches aus 25 Gewichtsprozent iso- und 75 Gewichtsprozent n-Pentan innerhalb von 10 bis 15 Minuten und unmittelbar vor der Treibmittelzugabe bei einem Monomerumsatz von etwa 75% die Veränderung der Drehzahl des Rührers. Der Ansatz wurde nach einer weiteren Stunde bei 90 °C auf 120 °C aufgeheizt und 6 Stunden bei dieser Temperatur gehalten.

Nach Beendigung des Polymerisationszykluses wurde abgekühlt, das entstandene Perlpolymerisat von der wässrigen Phase abgetrennt, getrocknet und gesiebt. Das fertige Produkt wurde mit einer Oberflächenbeschichtung ausgerüstet.

Die Perlfraktion zwischen 1 und 2 mm Durchmesser wurde in einem kontinuierlichen Vorschäumer, Typ Rauscher, in strömendem Wasserdampf auf ein Schüttgewicht von 15 g/l vorgeschäumt, 24 Stunden zwischengelagert und anschliessend in einer Blockform mit den Abmessungen 100 × 50 × 100 bei unterschiedlichen Dampfdrücken zu Schaumstoffblöcken ausgeschäumt. Jedes Beispiel wurde mindestens 5mal wiederholt. Neben den Prüfwerten sind die Standardabweichungen angegeben. Die Prüfwerte sind in der Tabelle 1 zusammengestellt.

Aus den Beispielen der Tabelle 1 geht hervor, dass nur bei Anwenden der Verfahrensbedingungen der Erfindung ohne weitere Zusätze Produkte herstellbar sind, die bereits bei milden Ausschäumbedingungen Schaumstoffblöcke mit hohem Verschweissungsgrad und geringem Blockschrumpf bei ausreichend kurzer Kühlzeit liefern. Besonders eindrucksvoll ist die Möglichkeit, die Verarbeitungseigenschaften über die Rührerdrehzahl bei der Treibmittelzugabe zu steuern. Die Tabelle macht deutlich, dass die Rührbedingungen während der Treibmittelzugabe wesentlich ist und nicht das Rühren davor, d. h. bei der eigentlichen Polymerisation.

Àbbildung 2 stellt einen Reaktor dar, bei dem die Füllhöhe (2) kleiner als das 1,5fache des Reaktordurchmessers (1) ist.

Die Versuchsergebnisse der Tabelle 1 sind in 150 l-Kesseln durchgeführt, für die folgende Massangaben gelten (mm):

Abb. 2

| 600 | Reaktordurchmesser | (1) |
|---|---|---|
| 500 | Füllhöhe | (2) |
| 50 | Rührerabstand vom tiefsten Punkt des Reaktorbodens | (3) |
| 225 | Durchmesser des Stromstörers | (4) |
| 440 | Durchmesser der bewegten Zone | (5) |

Die Massverhältnisse können in üblicher Weise grösseren Reaktoren angepasst werden.

Tabelle 1

| Bei-spiel Nr. | Reaktor | Rührer-Drehzahl UpM | | Rühr-Trombe | Bläschen-Grösse Vorschaum mm[7] | MFZ[1] min | Verschw.[2] Grad % | Block-[3] schrumpf % | Zellig-keit Zellen[4] mm |
|---|---|---|---|---|---|---|---|---|---|
| | | Treibmittelzugabe vor | während | | | | | | |
| 1 | Abb. 2 | 200 | 120 | keine | 0,2 | 25±2 | 90±10 | <0,2 | 4– 6 |
| 2 | Abb. 2 | 120 | 120 | keine | 0,2 | 25±2 | 90±10 | <0,2 | 4– 6 |
| V3 | Abb. 2 | 200 | 200 | stark | <0,05 | 10±2 | 30±10 | 1,5±0,4 | 2–10 |
| V4 | Abb. 2 | 120 | 200 | stark | <0,05 | 10±2 | 30±10 | 1,5±0,4 | 2–10 |

Die Beispiele 1 und 2 sind gemäss Erfindung, die Beispiele V3 und V4 sind Vergleichsbeispiele.

Tabelle 2
Einfluss der Bedampfungsbedingungen

| Beispiel Nr. | Bedamp-fungs-Zeit sek[5] | Dampf-druck bar[6] | Verschw.-grad[2] % | Block-schrumpf[3] % |
|---|---|---|---|---|
| 1, 2 | 0 | 1,9 | 100 | <0,2 |
| Erfindung | 20 | 1,8 | 90±10 | <0,2 |
| | 50 | 1,5 | 90±10 | <0,2 |
| | 20 | 1,5 | 90±10 | <0,2 |
| V3, V4 | 20 | 1,8 | 30±10 | 1,5±0,4 |
| Vergleich | 50 | 1,5 | 20±10 | 1,5±0,4 |

Beispiel 5 sowie Vergleichsbeispiele V6 bis V9 (Erläuterungen Tabelle 3)

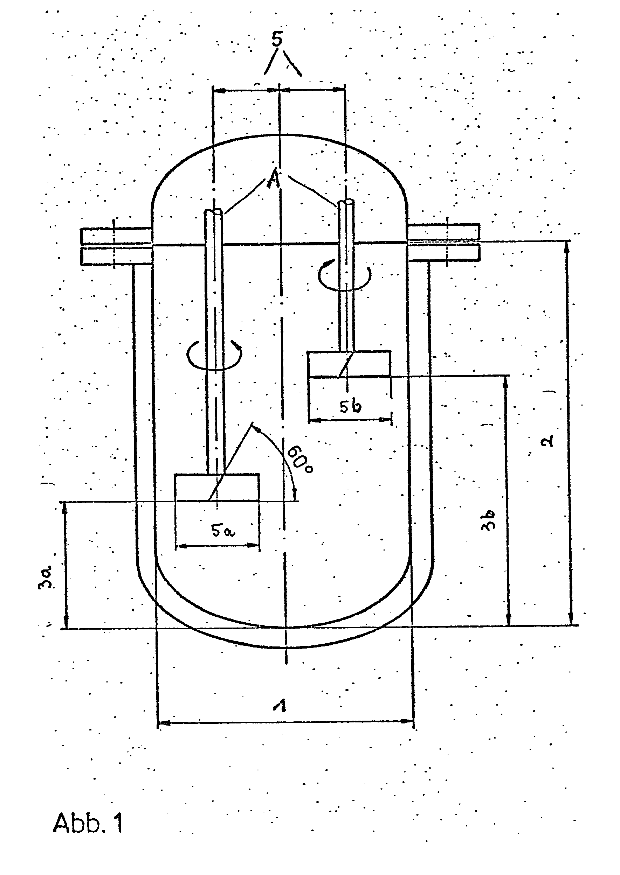

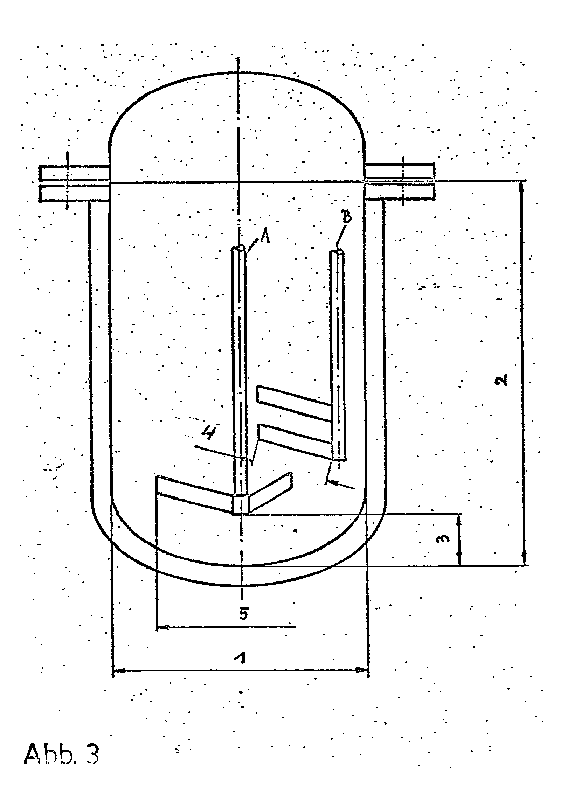

In den in den Abbildungen 1 und 3 dargestellten Reaktoren wurde dieselbe Rezeptur eingesetzt wie in den Beispielen 1 bis 4. In den Reaktor nach Abbildung 1 wurde ein Rührsystem eingebaut, das unter dem Namen Doppel-Axial-Turbulenzsystem (DAT-Rührsystem) bekannt ist. Die beiden Rührer ermöglichen auch bei einem Füllgrad des Reaktors von 90% eine homogene Durchmischung des Reaktorinhaltes, ohne dass eine Rührertrombe auftritt. In dem Reaktor nach Abbildung 3 wurde mit einem Rührsystem analog Abbildung 2 gearbeitet. Die Ergebnisse, zusammengestellt in Tabelle 2, decken sich mit denen, die im Rekator nach Abbildung 2 erhalten wurden.

Die in Tabelle 3 zusammengestellten Ergebnisse zeigen, dass mit dem DAT-Rührsystem ein verbessertes Produkt herstellbar ist, wenn die dem Gasraum zugekehrte Seite der Flüssigphase ohne Bewegung ist. Mit dem Rührsystem nach Abbildung 3 lässt sich in diesem Reaktortyp eine solche Bewegung nicht hinreichend einstellen.

Abbildung 1 und 3 stellen einen Reaktor dar, bei dem die Füllhöhe (2) mindestens das 1,5fache des Reaktordurchmessers (1) darstellt. In Abbildung 1 bedeuten (3 a) und (3 b) wieder den Abstand der Rührer vom tiefsten Punkt des Kesselbodens. Der Abstand der Rührerachse von der Symmetrieachse des Kessels ist mit (5), der Durchmesser der Rührer mit (5 a) und (5 b) bezeichnet. In Abbildung 3 ist der Rührer mit (A), die Stromstörer sind mit (B), der Abstand des Rührers vom tiefsten Punkt des Kesselbodens ist mit (3), der Durchmesser des Stromstörers mit (4) und der Durchmesser der bewegten Zone mit (5) bezeichnet.

Die Versuchsergebnisse der Tabelle 3 sind analog in einem 150 l-Kessel erhalten worden, für den folgende Massangaben (mm) gelten:

Abb. 1

| 500 | Reaktordurchmesser | (1) |
|-----|--------------------|-----|
| 750 | Füllhöhe | (2) |
| 247 | Rührerabstand vom tiefsten | (3a) |
| 487 | Punkt des Reaktorbodens | (3b) |
| 125 | Abstand der Rührerachse von der Symmetrieachse des Reaktors | (5) |
| 167 | Durchmesser der Rührer | (5b) |

Die Massverhältnisse können in üblicher Weise grösseren Reaktoren angepasst werden.

Abb. 3

| 500 | Reaktordurchmesser | (1) |
|-----|--------------------|-----|
| 750 | Füllhöhe | (2) |
| 100 | Rührerabstand vom tiefsten Punkt des Reaktorbodens | (3) |
| 160 | Durchmesser des Stromstörers | (4) |
| 350 | Durchmesser der bewegten Zone | (5) |

Die Massverhältnisse können in üblicher Weise grösseren Reaktoren angepasst werden.

Tabelle 3

| Bei-spiel Nr. | Reaktor | Rührer-Drehzahl UpM Treibmittelz. vor / während | Rühr-Trombe | Bläschen-Grösse Vorschaum mm[7] | MFZ[1] min | Ver schw.[2] Grad % | Block[3] schrumpf % | Zellig-keit Zellen[4] mm | Bemerkungen |
|------|---------|------|------|------|------|------|------|------|------|
| 5 | Abb. 1 | 250 / 200 | | 0,2 | $25\pm2$ | $90\pm10$ | $<0,2$ | 4– 6 | Oberfläche der Flüssigphase ohne Bewegung |
| V6 | Abb. 1 | 250 / 300 | | $<0,05$ | $10\pm2$ | $40\pm10$ | $1,5\pm0,4$ | 2–10 | Oberfläche unruhig sprudelt |
| V7 | Abb. 3 | 250 / 150 | leicht | $<0,05$ | $10\pm2$ | $30\pm10$ | $1,5\pm0,4$ | 2–10 | |
| V8 | Abb. 3 | 250 / 200 | stark | – | $10\pm5$ | $20\pm10$ | $3,8\pm1,0$ | 1–20 | |
| V9 | Abb. 3 | 250 / 250 | stark | – | $10\pm5$ | $20\pm10$ | $3,8\pm1,0$ | 1–20 | |

Das Beispiel 8 ist gemäss der Erfindung, die Beispiele V6 bis V9 sind Vergleichsbeispiele.

Erläuterungen zu Tabellen 1 bis 3

[1] Mindestformverweilzeit

[2] Unter Verschweissungsgrad wird das Verhältnis der Zahl der durchgerissenen Perlen zur Gesamtzahl der Partikel $\times$ 100 ($=$ %) verstanden. Als Testobjekt dient eine Schaumstoffplatte der Masse 100 $\times$ 100 $\times$ 5 cm.

[3] Als Blockschrumpf wird das Einfallen der Seitenflächen verstanden, der 24 Stunden nach der Herstellung des Blockes gemessen wird. Der Blockschrumpf wird ermittelt, indem man die Blockdicke von der Mitte einer grossen Seitenfläche zur gegenüberliegenden rechtwinkelig zu diesen Seitenflächen misst ($1_2$). Die Differenz zwischen den lichten Massen der Form an dieser Stelle ($1_1$) und der gemessenen Blockdicke in % der lichten Masse der Form ($1_1$) umgerechnet ergibt den Blockschrumpf [($1_1 - 1_2$) $= \Delta \cdot 1; \dfrac{\Delta 1}{1_1} \cdot 100$ ist Blockschrumpf in %].

[4] Zur mikroskopischen Bestimmung der Zellzahl wurden pro Versuch aus dem Block an 10 verschiedenen Stellen Platten entnommen und ausgezählt. Die angegebenen Werte sind die jeweils höchsten und niedrig-

sten ermittelten Zellzahlen. Je näher die Werte nebeneinanderliegen, desto homogener ist die Zellstruktur des Blockes.

[5] Als Bedampfungszeit zählt die Zeit vom Erreichen des angegebenen Dampfdruckes in der Blockform bis zum Verschliessen des Dampfzuführungsventiles.

[6] Dampfdruck in der Blockform.

[7] Unter der Bläschengrösse der Vorschaumperlen ist der mittlere Durchmesser der nach aussen weisenden Zellen des Vorschaumes zu verstehen. Die Ermittlung erfolgte durch Ausmessen an den durch Rasterelektronenmikroskopie aufgenommenen Bildern des Vorschaumes, wobei aus jeweils 50 Messungen ein Mittelwert genommen wurde (Abbildungen 4 bis 8).

**Patentansprüche**

1. Verfahren zur Herstellung feinteiliger, expandierbarer Styrolpolymerisate mit gleichmässiger Zellstruktur, die nach einer Vorschäumstufe in nicht gasdicht schliessenden Formen zu Schaumstoffkörpern versintert werden, durch Polymerisation von Styrol und gegebenenfalls üblichen Comonomeren in wässriger Suspension unter Rühren in einem nicht vollständig gefüllten Reaktor in Gegenwart monomerlöslicher, radikalbildender Initiatoren und Dispergiermittel unter Zusatz von niedrigsiedenden, nur quellenden, flüssigen aliphatischen Kohlenwasserstoffen als Treibmittel bei einem Monomerumsatz von mindestens 70%, dadurch gekennzeichnet, dass während der Treibmittelzugabe, bei einem Monomerumsatz von 70 bis 85%, die zu beladenden Polymerperlen intensiv gerührt werden, so dass diese eine möglichst geringe zeitliche und räumliche Berührung mit der Gasphase und untereinander erfahren und während dieser Treibmittelzugabe somit ein ausgeglichenes Verhältnis von Horizontal- und Vertikaldurchmischung erreicht wird und beim Rühren die dem Gasraum zugekehrte Seite der Flüssigphase ohne Bewegung bleibt.

2. Verfahren nach Anspruch 1, dadurch gekennzeichnet, dass die Füllhöhe das 0,5- bis kleiner als 1,5fache des Reaktordurchmessers beträgt und nur ein achsenparallel angeordneter Rührer und entsprechende Stromstörer angewendet werden.

3. Verfahren nach den Ansprüchen 1 und 2, dadurch gekennzeichnet, dass die Füllhöhe mindestens das 1,5fache bis 3fache des Reaktordurchmessers beträgt und zwei unsymmetrisch angeordnete Rührer mit engegengesetzter Drehrichtung angewendet werden.

4. Verfahren nach den Ansprüchen 1 bis 3, dadurch gekennzeichnet, dass das Treibmittel in die Flüssigphase eindosiert wird.

5. Verfahren nach den Ansprüchen 3 und 4, dadurch gekennzeichnet, dass der Reaktor mindestens einen Rauminhalt von 50 m³ besitzt.

6. Verwendung der nach den Ansprüchen 1 bis 5 erhaltenen expandierbaren feinteiligen Styrolpolymerisate zur Herstellung von Formkörpern.

**Claims**

1. A process for the production of a finely divided, expandable styrene polymer of uniform cell structure, which polymer, after a preofoaming stage, is sintered in a non-gastight mould to give a moulded foam body, by polymerization of styrene optionally with one or more conventional comonomers in aqueous suspension with stirring in an incompletely filled reactor in the presence of a monomer-soluble, radical-forming initiator and a dispersing agent with the addition as blowing agent of a low-boiling, liquid aliphatic hydrocarbon which has only a swelling action, up to a monomer conversion of at least 70%, characterised in that, during the addition of blowing agent, at a monomer conversion of 70 to 85%, the polymer beads to be charged are intensively stirred so that they are exposed to the least possible contact in time and space both with the gas phase and with one another and during this addition of blowing agent as a result a balance of horizontal and vertical mixing effects is obtained and the surface of the liquid phase which faces the gas space remains motionless during the stirring.

2. A process according to claim 1, characterised in that the filling level is from 0.5 times to less than 1.5 times the reactor diameter and only a stirrer arranged parallel to the axis and corresponding baffles are used.

3. A process according to claim 1 or 2, characterised in that the filling level is at least 1.5 times to 3 times the reactor diameter and two unsymmetrically arranged stirrers with opposite directions of rotation are used.

4. A process according to any of claims 1 to 3, characterised in that the blowing agent is metered into the liquid phase.

5. A process according to claim 3 or 4, characterised in that the reactor has a capacity of at least 50 m³.

6. The use of an expandable, finely divided styrene polymer obtained according to any of claims 1 to 5 for the production of moulded bodies.

**Revendications**

1. Procédé pour la préparation de produits de polymérisation de styrène expansibles, en fines particules, à structure aivéoiaire uniforme, que l'on fritte, après une étape de prémoussage, dans des moules ne fermant pas de façon étanche aux gaz, à l'état de corps en matière alvéolaire, par polymérisation de styrène et éventuellement de comonomères usuels en suspension aqueuse sous agitation, dans un réacteur qui n'est pas rempli complètement, en présence d'amorceurs solubles dans le monomère et formant des radicaux et d'agents de dispersion, avec additon d'hydrocarbures aromatiques liquides à bas point d'ébullition, gonflant seulement, en tant que poro- gènes, avec une conversion de monomères d'au moins 70%, caractérisé par le fait que pendant l'addition de porogène, à une conversion de monomère de 70 à 85%, on agite intensément les perles de polymère à introduire, de sorte que celles-ci subissent un contact aussi réduit que possible dans le temps et dans l'espace avec la phase gazeuse et entre elles et que, pendant cette addition de porogène, on obtient ainsi un rapport équilibré de mélange horizontal et vertical et que, lors de l'agitation, le côté de la phase liquide qui est tourné vers la poche de gaz reste sans mouvement.

2. Procédé selon la revendication 1, caractérisé par le fait que la hauteur de remplissage représente de 0,5 à moins de 1,5 fois le diamètre du réacteur et que l'on utilise seulement un agitateur disposé parallèlement à l'axe et des déflecteurs appropriés.

3. Procédé selon les revendications 1 et 2, caractérisé par le fait que la hauteur de remplissage représente au moins 1,5 à 3 fois le diamètre du réacteur et que l'on utilise deux agitateurs disposés asymétriquement, à sens de rotation apposé.

4. Procédé selon les revendications 1 et 3, caractérisé par le fait que l'on introduit le porogène de façon dosée dans la phase liquide.

5. Procédé selon les revendications 3 et 4, caractérisé par le fait que le réacteur a au moins une capacité de 50 m³.

6. L'utilisation, pour la fabrication de pièces moulées, des produits de polymérisation de styrène expansibles en fines particules obtenus selon les revendications 1 à 5.

Abb. 1

Abb. 2

Abb. 3

Abbildung 4    Vorschaumperlen, hergestellt aus Material
nach Beispiel 1 (Lichtmikroskop. Aufnahme)

Abbildung 5    Vorschaumperlen, hergestellt aus Material
nach Beispiel 13 (Vergleichspiel)
(Lichtmikroskop. Aufnahme)

Abb. 6 a

Abb. 6 b

Abb. 7 a

Abb. 7 b

Abbildung 8  Beispiel 3 (Vergleichsbeispiel)

Abb. 9 a

Abb. 9 b